# EUROPÄISCHE PATENTSCHRIFT

(11) **EP 2 798 161 B1**
(45) Veröffentlichungstag und Bekanntmachung des Hinweises auf die Patenterteilung: **12.04.2017**
(21) Anmeldenummer: 12813770.0
(22) Anmeldetag: 27.12.2012
(51) Int. Cl.: F01D 21/00, B23P 6/00, F01D 5/00

(54) **VERFAHREN ZUR REPARATUR EINER EINLAUFSCHICHT EINES VERDICHTERS EINER GASTURBINE**
METHOD FOR REPAIRING A RUN-IN LAYER OF A COMPRESSOR FOR A GAS TURBINE
PROCÉDÉ DE RÉPARATION D'UNE COUCHE D'ENTRÉE D'UN COMPRESSEUR DE TURBINE À GAZ

(30) Priorität: 28.12.2011 DE 102011122549
(43) Veröffentlichungstag der Anmeldung: 05.11.2014
(73) Patentinhaber: Rolls-Royce Deutschland Ltd & Co KG, 15827 Blankenfelde-Mahlow (DE)
(72) Erfinder: RAUTENBERG, Joachim, 61440 Oberursel (DE); DUPRÈ, Jürgen, 15711 Zeesen (DE); UHLMANN, Eckart, 25368 Kiebitzreihe (DE); VAN DUIKEREN, Bart, 12163 Berlin (DE)
(74) Vertreter: Hoefer & Partner Patentanwälte mbB
(86) Internationale Anmeldenummer: PCT/EP2012/005381
(87) Internationale Veröffentlichungsnummer: WO 2013/097944

(56) Entgegenhaltungen:
- EP-A2- 1 975 271
- WO-A1-00/06336
- US-A1- 2005 235 493
- US-A1- 2009 001 059

## Beschreibung

Die Erfindung bezieht sich auf Verfahren zur Reparatur einer Einlaufschicht eines Verdichters einer Gasturbine, bei welchem zumindest ein verschlissener Bereich der Einlaufschicht im nicht-demontierten Zustand der Gasturbine repariert wird.

Einlaufschichten für Verdichterbeschaufelungen in Flugzeugtriebwerken oder in stationären Gasturbinen sind weiche Schichten, die ein Einlaufen der Verdichterbeschaufelung in die statische oder sich drehende härtere Gegenseite sicherstellen soll. Es werden im Wesentlichen Al-Si-Polyester, Al-Si-Graphit, Ni-Graphit oder Aluminiumoxid Beschichtungen verwendet. Damit erreicht man ein möglichst kleines Spitzenspiel und somit einen guten Verdichterwirkungsgrad. Während des Betriebes eines Triebwerks verschleißen die Einlaufschichten entweder komplett über den gesamten Umfang oder auch nur partiell. Dies führt zu einem Leistungsverlust des Triebwerks, verursacht durch eine Verschlechterung des Verdichterwirkungsgrades und zu Schwingungen, die wiederum die Verdichterbeschaufelung zu unkontrollierten Schwingungen und letztendlich auch zu Rissen an Triebwerksschaufeln anregen. Aus diesen Gründen müssen die Einlaufschichten im Rahmen einer Reparaturmaßnahme wieder in einen ordnungsgemäßen Zustand gebracht werden.

Für die Durchführung der Reparatur muss nach dem Stand der Technik das Triebwerk aus dem Luftfahrzeug ausgebaut und in dafür vorgesehene und autorisierte Werkstätten überführt werden. Diese Werkstätten benötigen eine Ausstattung, die denen der Neuteilfertigungseinrichtungen entsprechen. Darüber hinaus muss das Luftfahrzeug während der Zeitdauer der Triebwerksinstandsetzung mit einem Ersatztriebwerk ausgerüstet werden.

Die US 2005/235493 A1 beschreibt ein Reparaturverfahren für Hitzeschutzschichten, bei welchem im nicht-demontierten Zustand der Gasturbine ein Werkzeug eingebracht und die verschlissene Hitzeschutzschicht nach Reinigung und Aufrauhung des zu reparierenden Bereichs durch Aufbringen eines Keramikmaterials repariert wird.

Die WO 00/06336 A1 zeigt eine Vorrichtung zur Durchführung von Arbeiten an schwer zugänglichen Bereichen, welches boroskopartig ausgebildet ist und zusätzliche Funktionen, insbesondere zur Materialaufbringung vorsieht.

Der Erfindung liegt die Aufgabe zugrunde, ein Reparaturverfahren der eingangs genannten Art zu schaffen, welches bei einfacher Durchführung eine kostengünstige Reparatur ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass eine verschlissene Einlaufschicht im nicht-demontierten Zustand der Gasturbine repariert wird. Dabei wird zunächst mittels eines Boroskops im nicht-demontierten Zustand eine Analyse und/oder Auswahl von zu reparierenden Bereichen der Einlaufschicht durchgeführt, wobei nachfolgend durch zumindest eine Boroskopie-Öffnung ein Werkzeug an den oder die zu reparierenden Bereiche gebracht und die Bereiche der verschlissenen Einlaufschicht, welche repariert werden sollen, zumindest zum Teil abgetragen werden. Das abgetragene Material wird dabei erfindungsgemäß abgesaugt, um zu verhindern, dass das Material sich unkontrolliert in der Gasturbine verteilt. Nachfolgend wird erfindungsgemäß der zu reparierende Bereich der Verschleißschicht zur Aufbringung eines Reparaturmediums gereinigt und/oder präpariert, insbesondere, um die Haftung des Reparaturmediums zu verbessern. Nachfolgend wird ein aushärtbares Reparaturmedium auf dem zu reparierenden Bereich aufgebracht und nachfolgend ausgehärtet, wobei ein aushärtbares, auf Aluminiumoxid basierendes Reparaturmedium auf den zu reparierenden Bereich mittels einer Art Luftdruckbürste aufgebracht und nachfolgend ausgehärtet wird und wobei nachfolgend der mit dem Reparaturmedium versehene Bereich mechanisch bearbeitet wird.

Besonders günstig ist es, wenn der zu reparierende Bereich vor der Aufbringung des Reparaturmediums gereinigt wird, dies kann beispielsweise mittels einer Reinigungsflüssigkeit und einer nachfolgenden Trocknung in bevorzugter Weise erfolgen.

Um eine gute Zugänglichkeit und eine verbesserte Reparaturmöglichkeit zu schaffen, ist es besonders günstig, wenn der zu reparierende Bereich eines Rotors der Gasturbine bei horizontaler Anordnung einer Maschinenachse oben liegend angeordnet wird.

Das Reparaturmedium besteht aus einem Aluminiumoxid, welches im ausgehärteten Zustand einen ähnlichen Wärmeausdehnungskoeffizienten sowie eine ähnliche Härte und Porosität wie die ursprüngliche Beschichtung besitzt. Die Viskosität des Reparaturmediums kann durch das Untermischen eines Verdünners angepasst werden. Das Reparaturmedium wird durch einen Schlauch zugeführt, welcher in einem Boroskop integriert werden kann. Das Applizieren kann mittels einer Luftdruckbürste durchgeführt werden. Erfindungsgemäß wird das Reparaturmedium in bevorzugter Gestaltung der Erfindung mehrlagig aufgebracht. Die Bestimmung der Schichtdicke geschieht hierbei bevorzugter weise halbautomatisch durch die Steuerung der aufgetragenen Menge an Reparaturmedium für den jeweiligen Beschichtungsabschnitt. Das Aushärten geschieht bevorzugterweise automatisch unter Luft durch das Einwirken von Wärme.

Um die Demontage einer Gasturbine zu ersparen, werden Sichtkontrollen mit einem Boroskop durchgeführt. Dieses dünne Rohr, das seinen Ursprung in der medizinischen Endoskopie hat, ist im Inneren mit einer Linsenoptik ausgestattet, die in einen zu untersuchenden Hohlraum eingeführt werden kann. Lichtleiterfasern umschließen die Optik und bringen das Licht aus einer angeschlossenen Quelle zum Ort der Inspektion, von wo ein reflektiertes Bild durch die Optik zurück zum Auge des Betrachters oder in eine Kamera mit angeschlossenem Bildschirm gelangt. So liefert die Boroskopie Bilder von Orten, die ohne die Demontage größerer Bauteile niemals zugänglich wären.

Ein Flugtriebwerk besitzt für die Boroskopie-Untersuchung eine Vielzahl spezieller Öffnungen, die es ermöglichen, die Optik direkt an die zu untersuchende Stelle zu führen, beispielsweise in jede einzelne Verdichterstufe. Für Letztere reicht eine einzige Öffnung, weil die zu untersuchenden Schaufeln per Hand vor die Optik des Boroskops gedreht werden können. Starre Bauteile ohne direkten Zugang werden mit einem Flexoskop inspiziert. Anstelle des starren Rohrs besitzt dieses Werkzeug einen biegsamen Schlauch, in dem Glasfasern die Linsenoptik ersetzen. Mit einer Arbeitslänge von mehreren Metern können damit auch Bauteile inspiziert werden, die nicht auf geradem Weg zu erreichen sind.

Mit der Erfindung wird somit ermöglicht, die Reparatur der Einlaufschichten auszuführen, ohne das Triebwerk vom Luftfahrzeug abzubauen. Bei stationären Gasturbinen wird die Ausfallzeit drastisch reduziert. Hierfür werden über an dem Triebwerk befindliche Boroskop-Öffnungen miniaturisierte Werkzeuge dem Reparaturbereich zugeführt. Mit Hilfe eines Mikrofräsers in Verbindung mit einer Absaugvorrichtung wird der betroffene Bereich bearbeitet. Der zu reparierende Bereich wird so präpariert, dass gute Voraussetzungen für die Haftung des Reparaturmediums gegeben sind. Zusätzlich kann dies durch das gezielte Strahlen mit spezieller Reinigungsflüssigkeit und anschließender Trocknung mit sauberer Luft unterstützt werden. Beides (Reinigungsflüssigkeit und Druckluft) wird mit einem Boroskop zugeführt.

Nach der Vorbereitung des Reparaturbereichs kann das Reparaturmedium, welches aus Aluminiumoxid Partikeln besteht, aufgebracht werden. Das Aufbringen erfolgt mittels einer Luftdruckbürste. Das Reparaturmedium und die Druckluft werden in zwei getrennten Leitungen an der Hinterseite vom Werkzeug zugeführt und im Werkzeug vermischt. Die Druckluftmenge wird durch ein Ventil geregelt. Die Zufuhr des Reparaturmediums wird über eine Nadel, die den Strömungsquerschnitt der Düse variiert, geregelt. Gegebenenfalls wird die Nadel mit Ultraschall angeregt, um ein Verstopfen der Düse zu verhindern.

Der axiale Abstand von der Düse zu der zu beschichtenden Fläche kann durch Verschieben der Führungsbuchse eingestellt werden. Die Düse ist um einige Grad gegenüber der Rotationsachse des Werkzeugs abgewinkelt. Durch eine Rotation vom Werkzeug um die Rotationsachse kann der Strahl gelenkt werden, hierdurch kann der Sprühbereich erweitert und die Auftragsgenauigkeit erhöht werden. Das Strahlbild ist abhängig von der Druckluft, dem Nadelstand und auch von der Geometrie der Düse. Besonders günstig ist es, wenn die Düse austauschbar ist und somit unterschiedliche Düsengeometrien angebracht werden können. Um den geometrischen Anforderungen verschiedener Verdichterstufen gerecht zu werden, werden gegebenenfalls mehrere Werkzeuge benötigt.

Das Aufbringen erfolgt in mehreren Lagen. Der Rotor kann während der Reparatur mit einer genau regelbaren Geschwindigkeit rotiert werden. So ist es möglich, den Rotor über den gesamten Umfang zu beschichten. Der mehrlagige Aufbau hat den Vorteil, dass der Reparaturbereich endkonturnah wieder hergestellt werden kann, was den Aufwand für eine anschließende mechanische Nacharbeit auf ein Minimum reduziert. Außerdem wird bei dünnen Schichten Tropfenbildung verhindert und es können auch senkrechte Flächen beschichtet werden. Weitere Schichten können in kurzen Intervallen aufgebracht werden.

Das Reparaturmedium soll nach dem Beschichten durch moderate Wärmezufuhr (Elektrisch, Gebläse oder Mikrobrenner) ausgehärtet werden. Nach dem Aushärten hat sich eine homogene Beschichtung gebildet. Gegebenenfalls müssen noch Ablagerungen in der Nähe des reparierten Bereichs entfernt werden.

Mittels des erfindungsgemäßen Verfahrens ist es somit möglich, teure Demontagen von Flugzeugtriebwerken zu vermeiden, insbesondere den Austausch eines Triebwerks gegen ein Ersatztriebwerk zu vermeiden, so wie dies nach dem Stand der Technik bei derartigen Reparaturarbeiten erforderlich ist. Es ergeben sich hierdurch ganz erhebliche Vorteile durch die verringerten Arbeitszeiten und durch die sich ergebende Kostenersparnis.

Im Folgenden wird die Erfindung anhand eines Ausführungsbeispiels in Verbindung der Zeichnung beschrieben. Dabei zeigt:
- Fig. 1: eine schematische Axial-Teil-Schnittansicht eines Verdichters einer Gasturbine mit Einlaufschichten,
- Fig. 2: eine schematische Darstellung eines Gasturbinentriebwerks mit Zugänglichkeiten für Boroskop-Arbeiten,
- Fig. 3: eine vereinfachte, schematische Darstellung des Einsatzes unterschiedlicher Boroskop-Geräte und Einheiten,
- Fig. 4: eine vereinfachte, schematische Darstellung eines Beschichtungswerkzeugs,
- Fig. 5: ein Funktionsprinzip der Werkzeugrotation zur Steuerung der Düse und des Strahls zum Auftrag mehrerer Schichten, und
- Fig. 6: eine vereinfachte Seitenansicht der erfindungsgemäßen Vorgehensweise.

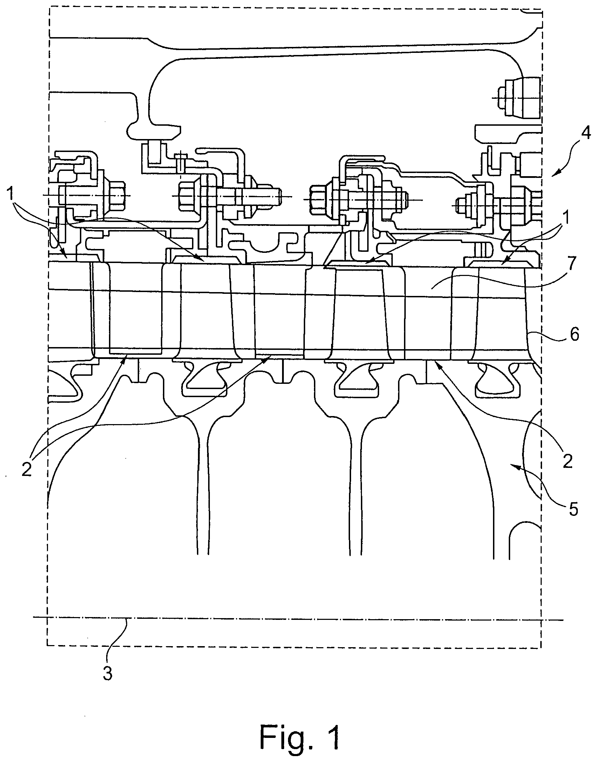

Die Fig. 1 zeigt eine Maschinenachse 3, um welche ein Rotor 5 eines Verdichters in einem Gehäuse 4 drehbar ist. Der Rotor umfasst in üblicher Ausgestaltung eines Verdichters mehrere Rotorschaufeln 6, deren freie Enden Einlaufschichten 1 des Verdichtergehäuses 4 zugewandt sind. In analoger Weise umfasst das Verdichtergehäuse 4 Statorschaufeln 7, deren freie, radial nach innen weisende Enden Einlaufschichten 2 des Rotors 5 (Verdichtertrommel) zugewandt sind. Die Einlaufschichten gelangen zur Minimierung des Spitzenspiels in Kontakt mit den freien Enden der Schaufeln 6, 7 und ermöglichen somit ein Einlaufen während des Betriebs der Gasturbine, so wie dies aus dem Stand der Technik bekannt ist.

Das erfindungsgemäße Reparaturverfahren erfolgt unter Verwendung zumindest eines Boroskops, welches durch geeignete Öffnungen des Gehäuses in den Bereich der Schaufeln 6, 7 eingebracht wird.

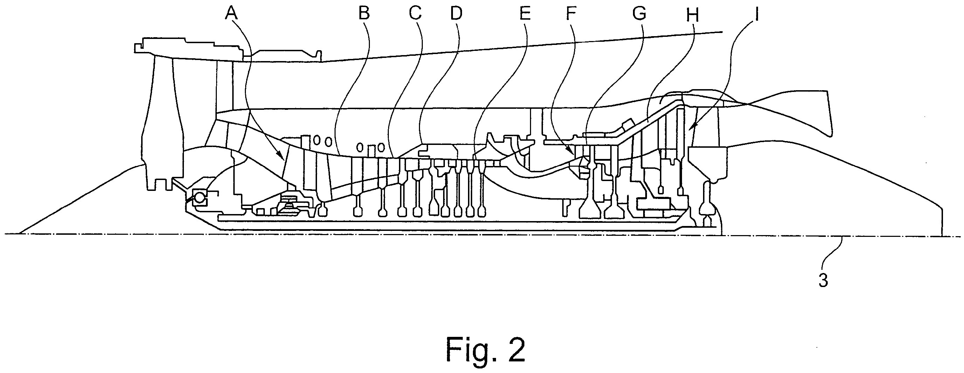

Die Fig. 2 zeigt eine schematische Teil-Axial-Schnittansicht eines Gasturbinentriebwerks mit prinzipiellen Zugänglichkeiten für Boroskop-Arbeiten. Dabei ist ersichtlich, dass durch Demontage von Anbauteilen, durch Öffnung von Zugangsöffnungen und Ähnlichem ein Zugang zu unterschiedlichsten Bereichen des Gasturbinentriebwerks möglich ist.

In Fig. 2 sind folgende Bauelemente/Baugruppen dargestellt:
- A: Hochdruckverdichterlaufschaufeln Stufe 1, Eintrittskante
- B: Hochdruckverdichterlaufschaufeln Stufe 1, Austrittskante Hochdruckverdichterlaufschaufeln Stufe 2, Eintrittskante
- C: Hochdruckverdichterlaufschaufeln Stufe 3, Austrittskante Hochdruckverdichterlaufschaufeln Stufe 4, Eintrittskante
- D: Hochdruckverdichterlaufschaufeln Stufe 5, Austrittskante Hochdruckverdichterlaufschaufeln Stufe 6, Eintrittskante
- E: Hochdruckverdichterlaufschaufeln Stufe 9, Austrittskante Hochdruckverdichterlaufschaufeln Stufe 10, Eintrittskante
- F: Hochdruckturbinenlaufschaufeln Stufe 1, Eintrittskante Hochdruckturbinenleitschaufeln Stufe 1, Brennkammer
- G: Hochdruckturbinenlaufschaufeln Stufe 1, Austrittskante Hochdruckturbinenlaufschaufeln Stufe 2, Eintrittskante
- H: Hochdruckturbinenlaufschaufeln Stufe 2, Austrittskante Niederdruckturbinenlaufschaufeln Stufe 1, Eintrittskante
- I: Niederdruckturbinenlaufschaufeln Stufe 2, Austrittskante

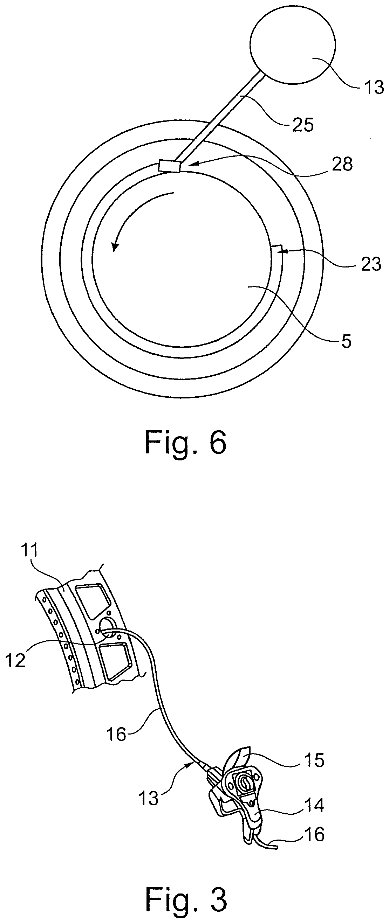

Die Fig. 3 zeigt in schematischer Weise den Einsatz von Boroskop-Geräten im Zusammenhang mit dem erfindungsgemäßen Verfahren. Dabei ist ein Teil eines Gehäuses 11 dargestellt, welches mit einer Boroskop-Öffnung 12 (Zugangsöffnung) versehen ist. Diese kann durch Entfernen eines Deckels oder durch Abbau eines Aggregats oder Ähnlichem geschaffen werden. Durch die Öffnung 12 wird ein Manipulator 13, eingeführt um Partikel abzutragen und abzusaugen bzw. zu analysieren. Eine Anzeige- und Betätigungseinheit bzw. die eine Steuereinheit 14 ermöglichen mittels eines Bildschirms 15 eine Überprüfung und Steuerung/Kontrolle der Arbeiten.

Der Manipulator 13 ist mit zumindest einem Schlauch 16 verbunden, durch welchen Medien zugeführt werden können. Anhand einer Anzeige kann die Menge der aufgebrachten Reparaturmasse abgelesen werden. Die Steuereinheit erlaubt eine genaue Einstellung der Auftragsgeschwindigkeit.

Es versteht sich, dass die Darstellung der Fig. 3 nur sehr schematisch die einzelnen Komponenten und deren Funktionsweise darstellt.

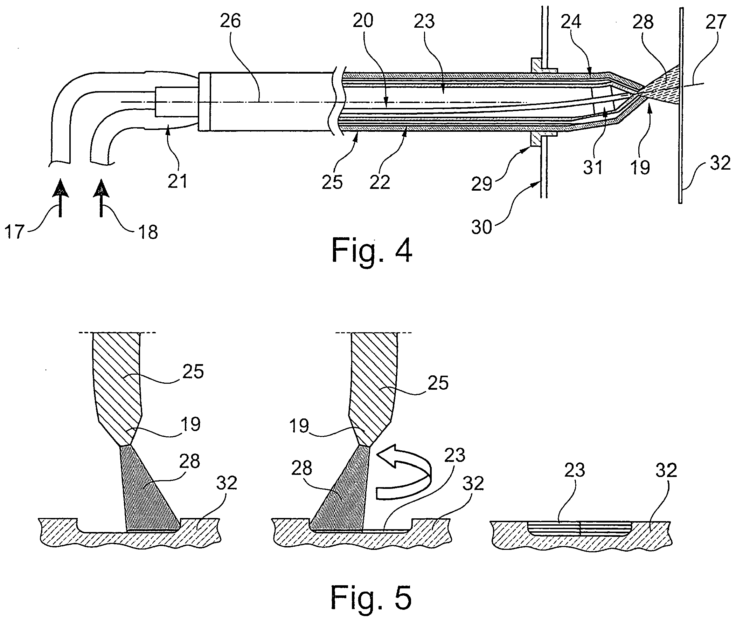

Die Fig. 4 zeigt eine vereinfachte, schematische Darstellung eines erfindungsgemäßen Beschichtungswerkzeugs 25. Im hinteren Teil des Werkzeugs 25 werden über Schläuche 16 ein Reparaturmedium 17 und die Druckluft 18 zugeführt. Die Zufuhrmenge des Reparaturmediums in einer Düse 19 wird mit einer Nadel 20 mittels eines Aktuators 21 angesteuert.

An der Vorderseite des Werkzeugs 25 befindet sich die Düse 19. In der Düse 19 werden das Reparaturmedium 23 und die Druckluft 22 vermischt. Die Düse 19 hat gegenüber der Mittelachse 26 des Werkzeugs 25 einen Winkel von einigen Grad, sodass der Strahl 28 durch Drehen des Werkzeugs lenkbar ist. Der Prozess ist mittels Glasfasern 24 mit integrierter Beleuchtung beobachtbar.

Die Fig. 4 zeigt, dass das Reparaturwerkzeug einen im Wesentlichen zylindrischen Körper aufweist, dessen vorderer Endbereich, wie erwähnt, in einem Winkel zu einer Mittelachse 26 des Werkzeugs 25 geneigt ist. Das Bezugszeichen 27 zeigt die Mittelachse der Düse 19, welche der Mittelachse des vorderen Endbereichs des Werkzeugs 25 entspricht. Durch eine Drehung des Werkzeugs 25 lässt sich somit der Austrittswinkel des Strahls 28 verändern, so dass der zu bestrahlende Bereich geeignet ausgewählt werden kann.

Die Fig. 4 zeigt weiterhin eine Führungsbuchse 29, welche in einer Ausnehmung eines äußeren Gehäuses 30 des Kompressors bzw. des Strömungskanals angeordnet ist und zur Führung des Werkzeugs 25 dient. Mit dem Bezugszeichen 32 ist ein inneres Gehäuse des Kompressors bzw. des Strömungskanals bezeichnet, auf welches mittels des Stahls 28 Reparaturmedium 23 aufgebracht wird.

Die Fig. 5 zeigt, wie das Reparaturmedium 23 in dünnen Schichten neben- und übereinander aufgetragen wird. Die linke Bildhälfte der Fig. 5 zeigt die Aufbringung einer ersten Schicht mittels des Strahls 28. Nachdem diese aufgetragen wurde, wird die nächste Schicht, wie in der Mitte der Fig. 5 dargestellt, aufgetragen. Die rechte Bildhälfte der Fig. 5 zeigt den fertigen Zustand, bei welchem mehrere einzelne Schichten an Reparaturmedium 23 aufgebracht wurden, um eine Einlaufschicht wieder herzustellen.

Die Fig. 6 zeigt in stark vereinfachter Darstellung die Aufbringung von Reparaturmedium 23 auf einen Rotor 25 in Seitenansicht. Dabei ist ersichtlich, dass mittels des Werkzeugs 25 Reparaturmedium durch Drehung des Rotors schichtenweise aufbringbar ist.

### Bezugszeichenliste

- 1: Einlaufschicht des Verdichtergehäuses
- 2: Einlaufschicht des Rotors
- 3: Maschinenachse
- 4: Verdichtergehäuse
- 5: Rotor / Verdichtertrommel
- 6: Rotorschaufel
- 7: Stator
- 11: Gehäuse
- 12: Zugangsöffnung/Boroskop-Öffnung
- 13: Manipulator
- 14: Steuereinheit
- 15: Bildschirm
- 16: Schlauch
- 17: Zufuhr für Reparaturmedium 23
- 18: Zufuhr für Druckluft 22
- 19: Düse
- 20: Nadel
- 21: Aktuator für die Nadel 42
- 22: Druckluft
- 23: Reparaturmedium
- 24: Lichtleiter zum optischen Beobachten des Reparaturvorgangs
- 25: Reparaturwerkzeug
- 26: Mittelachse des Werkzeugs 25
- 27: Mittelachse der Düse 19
- 28: Strahl
- 29: Führungsbuchse
- 30: äußeres Gehäuse von Kompressor/Strömungskanal
- 31: Führung für Nadel 42
- 32: inneres Gehäuse vom Kompressor/Strömungskanal

## Patentansprüche

1. Verfahren zur Reparatur einer Einlaufschicht (1, 2) eines Verdichters einer Gasturbine, bei welchem eine verschlissene Einlaufschicht (1, 2) repariert wird, wobei mittels eines Boroskops im nicht-demontierten Zustand der Gasturbine eine Analyse und/oder Auswahl von zu reparierenden Bereichen der Einlaufschicht (1, 2) durchgeführt wird, wobei durch zumindest eine Boroskopie-Öffnung der Gasturbine ein Werkzeug an den zu reparierenden Bereich gebracht und die verschlissene Einlaufschicht (1, 2) zumindest zum Teil abgetragen wird, wobei das abgetragene Material abgesaugt wird, wobei der zu reparierende Bereich der Einlaufschicht (1, 2) zur Aufbringung eines Reparaturmediums (23) gereinigt und/oder präpariert wird, wobei ein aushärtbares Reparaturmedium (23) auf den zu reparierenden Bereich aufgebracht und nachfolgend ausgehärtet wird, wobei der zu reparierende Bereich eines Rotors (5) der Gasturbine bei horizontaler Anordnung einer Maschinenachse (3) obenliegend angeordnet wird, und wobei zur Aufbringung des Reparaturmediums (23) der Rotor (5) gedreht wird, um eine Relativbewegung zwischen dem Werkzeug (25) und der zu reparierenden Oberfläche zu erzeugen.

2. Verfahren nach Anspruch 1, **dadurch gekennzeichnet, dass** das Reparaturmedium (23) aus einer Mischung von Aluminiumoxid mit einem Verdünner besteht.

3. Verfahren nach einem der Ansprüche 1 oder 2, **dadurch gekennzeichnet, dass** das Reparaturmedium (23) mehrlagig aufgebracht wird.

4. Verfahren nach einem der Ansprüche 1 bis 3, **dadurch gekennzeichnet, dass** das Reparaturmedium (23) mittels einer Luftdruckbürste aufgebracht wird, die gegenüber der Längsrichtung vom Werkzeug (25) in einem Winkel von einigen Grad drehbar ist, sodass der Strahl (28) durch Drehen des Werkzeugs (25) lenkbar ist.

5. Verfahren nach einem der Ansprüche 1 bis 4, **dadurch gekennzeichnet, dass** ein selbsthärtendes oder wärmeunterstütztes Reparaturmedium verwendet wird.

6. Verfahren nach einem der Ansprüche 1 bis 5, **dadurch gekennzeichnet, dass** das Verfahren unter visueller Kontrolle durchgeführt wird.

7. Verfahren nach einem der Ansprüche 1 bis 6, **dadurch gekennzeichnet, dass** die Reinigung des zu reparierenden Bereichs mittels einer Reinigungsflüssigkeit und einer nachfolgenden Trocknung erfolgt.

8. Verfahren nach einem der Ansprüche 1 bis 7, **dadurch gekennzeichnet, dass** der Abtrag der verschlissenen Einlaufschicht mittels eines Mikrofräsers und einer Absaugvorrichtung erfolgt.

## Claims

1. Method for repairing an abradable coating (1, 2) of a compressor of a gas turbine, where a worn abradable coating (1, 2) is repaired, where an analysis and/or selection of areas of the abradable coating (1, 2) to be repaired is conducted by means of a boroscope in the non-removed state of the gas turbine, where a tool is passed through at least one boroscope aperture of the gas turbine to the area to be repaired and the worn abradable coating (1, 2) is at least partially removed, where the removed material is extracted, where the area of the abradable coating (1, 2) to be repaired is cleaned and/ or prepared for application of a repair medium (23), where a hardenable repair medium (23) is applied to the area to be repaired and then hardened, where the area to be repaired of a rotor (5) of the gas turbine is positioned on top when a machine axis (3) is arranged horizontally, and where for application of the repair medium (23) the rotor (5) is rotated in order to generate a relative movement between the tool (25) and the surface to be repaired.

2. Method in accordance with Claim 1, **characterized in that** the repair medium (23) is a mixture of aluminum oxide and a thinner.

3. Method in accordance with one of the Claims 1 or 2, **characterized in that** the repair medium (23) is applied in several layers.

4. Method in accordance with one of the Claims 1 to 3, **characterized in that** the repair medium (23) is applied by means of an airbrush, which is rotatable relative to the longitudinal direction of the tool (25) at an angle of several degrees, such that the jet (28) is controllable by rotating the tool (25).

5. Method in accordance with one of the Claims 1 to 4, **characterized in that** a self-hardening or heat-supported repair medium is used.

6. Method in accordance with one of the Claims 1 to 5, **characterized in that** the method is conducted under visual control.

7. Method in accordance with one of the Claims 1 to 6, **characterized in that** cleaning of the area to be repaired is done by means of a cleaning fluid and subsequent drying.

8. Method in accordance with one of the Claims 1 to 7, **characterized in that** the worn abradable coating is removed by means of a micro-cutter and an extraction device.

## Revendications

1. Procédé de réparation d'une couche abradable (1, 2) d'un compresseur d'une turbine à gaz dans lequel une couche abradable (1, 2) usée est réparée, sachant qu'une analyse et/ ou sélection de zones à réparer de ladite couche abradable (1, 2) est effectuée au moyen d'un boroscope dans l'état non-démonté de la turbine à gaz, sachant que par au moins un orifice de boroscopie de la turbine à gaz un outil est passé à la zone à réparer et que la couche abradable (1, 2) usée est au moins partiellement éliminée en aspirant le matériau enlevé, sachant que la zone à réparer de la couche abradable (1, 2) est nettoyée et/ ou préparée pour appliquer un agent de réparation (23), sachant qu'un agent de réparation (23) durcissable est appliqué sur la zone à réparer et ensuite durci, sachant que la zone à réparer d'un rotor (5) de la turbine à gaz est placée en haut lorsqu'un axe (3) de machine est orienté à l'horizontale, et sachant que pour l'application dudit agent de réparation (23) le rotor (5) est mis en rotation afin d'obtenir un mouvement relatif entre l'outil (25) et la surface à réparer.

2. Procédé selon la revendication n° 1, **caractérisé en ce que** l'agent de réparation (23) est composé d'un mélange d'oxyde d'aluminium et d'un diluant.

3. Procédé selon une des revendications n° 1 ou n° 2, **caractérisé en ce que** l'agent de réparation (23) est appliqué en plusieurs couches.

4. Procédé selon une des revendications n° 1 à n° 3, **caractérisé en ce que** l'agent de réparation (23) est appliqué au moyen d'un aérographe pivotable de quelques degrés angulaires par rapport à la direction longitudinale de l'outil (25), de façon à pouvoir contrôler le jet (28) en pivotant l'outil (25).

5. Procédé selon une des revendications n° 1 à n° 4, **caractérisé en ce que** l'agent de réparation utilisé est autodurcissant ou à assistance thermique.

6. Procédé selon une des revendications n° 1 à n° 5, **caractérisé en ce que** le procédé est exécuté sous contrôle visuel.

7. Procédé selon une des revendications n° 1 à n° 6, **caractérisé en ce que** le nettoyage de la zone à réparer est effectué au moyen d'un liquide nettoyant, suivi d'un séchage.

8. Procédé selon une des revendications n° 1 à n° 7, **caractérisé en ce que** l'enlèvement de la couche abradable usée est effectué au moyen d'une micro-fraise et d'un dispositif d'aspiration.
